# FASCICULE DE BREVET EUROPEEN

(11) **EP 4 574 920 B1**
(45) Date de publication et mention de la délivrance du brevet: **20.05.2026**
(21) Numéro de dépôt: 23219372.2
(22) Date de dépôt: 21.12.2023
(51) Int. Cl.: C09K 11/02, C09K 11/77, C08K 3/36, C08L 63/00

(54) **MATÉRIAU PHOTOLUMINESCENT PLUS PERFORMANT**
LICHTEMITTIERENDES MATERIAL MIT VERBESSERTER LEISTUNG
HIGH PERFORMANCE PHOTOLUMINESCENT MATERIAL

(43) Date de publication de la demande: 25.06.2025
(73) Titulaire: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH)
(74) Mandataire: ICB SA

(56) Documents cités:
- US-A1- 2021 284 903

## Description

### Domaine technique de l'invention

L'invention concerne un matériau photoluminescent dont la performance luminescence est améliorée.

### Arrière-plan technologique

On connaît déjà les matériaux phosphorescents faits d'un mélange de matières transparentes ou translucides avec des pigments photoluminescents réalisés à partir d'oxydes minéraux dopés aux terres rares. On peut citer par exemple le mélange de borosilicates avec 50% d'aluminate de strontium dopés Europium, Dysprosium (Eu²⁺, Dy³⁺:SrAl₂O₄) ou le mélange de résines acryliques avec 50% d'aluminate de strontium dopés Europium, Dysprosium. La décroissance lumineuse de ces matériaux est d'abord exponentielle. Si on part d'une luminance de quelques dizaines de Cd/m² pour une matière mise dans l'obscurité après saturation en énergie lumineuse, la luminance au bout de 10 minutes dans l'obscurité sera inférieure à 1 Cd/m². La décroissance lumineuse tend ensuite lentement vers une asymptote à quelques mCd/m² expliquant que ces matériaux gardent une persistance lumineuse visible dans le noir jusqu'à 12 heures. La bonne lisibilité des instruments de plongée de manière passive fait appel à ces matériaux luminescents et les progrès en termes de performance lumineuse sont donc très attendus.

Le pigment phosphorescent étant sensible à l'humidité, il est aujourd'hui souhaitable pour réaliser les décors phosphorescents d'encapsuler les pigments dans une matière transparente et de réaliser ainsi un matériau photoluminescent. Pour des contraintes esthétiques, notamment la perception de jour, ces matériaux photoluminescents peuvent aussi être colorés à partir d'un système de coloration, mélange de pigments et d'additifs.

On réalise que les composés utilisés dans la matière photoluminescente, y compris les pigments colorants ont un effet d'extinction, dit quenching en anglais, des propriétés luminescentes, la luminance des matériaux phosphorescents étant le résultat d'une interaction physico-chimique entre les divers composés du matériau photoluminescent. US 2021/284903 A1 divulgue des matériaux photoluminescents.

### Résumé de l'invention

L'invention consiste à développer une nouvelle formulation pour les matériaux photoluminescents permettant de limiter le « quenching » lié aux composés ajoutés dans la formulation.

A cet effet, il est proposé d'ajouter dans la formulation un dopant de type silice poreuse dérivée d'algues. La silice poreuse provient de squelettes de diatomées. Il s'agit de microalgues qui sont des organismes unicellulaires à squelette de silice. En effet, selon les dernières recherches en biologie, la diatomée, algue monocellulaire qui compose le plancton, est constituée de nanocellules de silice très efficaces pour absorber la lumière du jour même dans les profondeurs sombres des océans afin de pouvoir effectuer leur photosynthèse de manière efficace.

Selon l'invention, l'ajout d'un pourcentage limité de silice poreuse, avec des teneurs inférieures ou égales au pourcent en masse, dans la matière photoluminescente permet d'améliorer significativement les propriétés de luminescence.

Plus précisément, l'invention se rapporte à un article réalisé dans un matériau photoluminescent comportant en poids une matrice polymérique dans un pourcentage compris entre 19,99% et 54,99%, un composé photoluminescent dans un pourcentage compris entre 45% et 80%, de la silice poreuse dans un pourcentage compris entre 0,01% et 1% et optionnellement un système de colorants et des additifs avec un pourcentage total pour le système de colorants et les additifs compris entre 0% et 15%, la silice poreuse est issue de squelettes de diatomées.

### Description détaillée de l'invention

L'invention concerne un matériau photoluminescent comportant de la silice poreuse etant issue de squelettes de diatomées. Elle concerne également un article revêtu ou réalisé avec ce matériau photoluminescent. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran, un rehaut, un disque de quantième, une aiguille et un index de cadran.

Le matériau photoluminescent comporte (est constitué de) une matrice polymérique, un composé photoluminescent, la silice poreuse, et éventuellement un système de colorants et des additifs.

Par rapport au poids total du matériau photoluminescent, la silice poreuse est présente dans un pourcentage en poids compris entre 0,01% et 1%, de préférence entre 0,07% et 0,3%, plus préférentiellement entre 0,09% et 0,2%. Il s'agit d'une silice poreuse provenant de squelettes de diatomées. Typiquement, le diamètre moyen des pores peut être de l'ordre de 500 nm. Eventuellement, il pourrait s'agir d'une silice poreuse synthétique. Pour une silice synthétique, les pores ont typiquement un diamètre moyen compris entre 0,1 µm et 3 µm. La matrice polymérique est présente dans un pourcentage en poids compris entre 19,99% et 54,99%, de préférence entre 29,93% et 49,93%, plus préférentiellement entre 29,91% et 49,91%. Il peut s'agir de tous les polymères transparents ou semi-transparents dans le visible. A titre d'exemple, il peut s'agir d'un ou plusieurs des polymères suivants : des résines de la famille des acryliques, de la famille des polyamides, de la famille des polyoléfines, de la famille des époxydes, de la famille des polyuréthanes, de la famille des élastomères fluorés et des silicones. Le composé photoluminescent est présent dans un pourcentage en poids compris entre 45% et 80%, de préférence entre 50% et 70%. Le composé luminescent peut être formé d'un pigment ou d'un pigment encapsulé dans une coque. Le pigment est de préférence un dérivé d'aluminate alcalino-terreux dopé aux terres rares. Plus spécifiquement, le pigment peut être de l'aluminate de strontium dopés Europium, Dysprosium avec la formule Sr(x)Al(y)O(z) : Eu²⁺,Dy³⁺. En particulier, il peut s'agir du Sr₄Al₁₄O₂₅ : Eu²⁺,Dy³⁺ ou encore du SrAl₂O₄ : Eu²⁺, Dy³⁺, éventuellement tous deux présents dans le composé photoluminescent. Avantageusement, les pigments peuvent présenter différentes granulométries pour permettre une répartition optimale dans le volume des pigments et éviter les espaces libres. La présence de différentes granulométries dans le volume permet également de cumuler des petites particules formant des pièges de faible profondeur en surface responsables d'une intensité lumineuse importante sur les temps courts avec des grosses particules formant des pièges plus profonds responsables de la rémanence lumineuse sur les temps longs. A titre d'exemple, les pigments peuvent présenter une première plage granulométrique centrée sur un diamètre D1 compris entre 500 nm et 10 µm, idéalement entre 500 nm et 5 µm et une deuxième plage granulométrique centrée sur un diamètre D2 compris entre 10 µm et 500 µm, idéalement entre 10 µm et 20 µm avec une mesure de la granulométrie réalisée par analyse granulométrique laser ISO 13320 :2020, éventuellement complétée par une analyse MEB d'imagerie par électrons secondaires. Il est à noter qu'il est possible de réaliser plus de deux fractions granulométriques par tamisage et de les combiner ensuite. Par exemple, il est possible d'avoir une première fraction entre 500 nm et 5 µm dans un pourcentage en poids de 20%, une deuxième fraction entre 5 µm et 20 µm dans un pourcentage en poids de 60% et une troisième fraction entre 20 µm et 50 µm dans un pourcentage en poids de 20%.

Les pigments peuvent éventuellement être encapsulés dans une coque transparente organique ou minérale. La coque organique peut typiquement être choisie parmi les polymères cités pour la matrice polymérique. Pour une coque minérale, il pourrait par exemple s'agir d'une coque en silice (SiO₂) obtenue par exemple via un procédé sol-gel. Toujours à titre d'exemple, on peut citer d'autres coques minérales telles que l'oxyde de zirconium (ZrO₂), l'oxyde d'aluminium (Al₂O₃), etc. Le matériau photoluminescent comporte optionnellement dans un pourcentage compris 0% et 15%, de préférence entre 0% et 5%, un système de colorants et des additifs. Le système de colorants comporte préférentiellement des colorants organiques qui n'absorbent pas dans les plages de longueur d'onde d'émission du pigment photoluminescent. Il peut s'agir de pigments ou de colorants fluorescents dont l'absorption est plutôt dans les UVs et l'émission dans le spectre visible. Par exemple, il peut s'agir de pigments ou colorant fluorescents organiques comme ceux de la marque Radiant ou Aralon^{®}. Il peut également s'agir de pigments ou de colorants translucides absorbant peu dans les longueurs d'onde d'émission du pigment phosphorescent. Par exemple, il peut s'agir de pigments ou colorants translucides de la marque Clariant. D'autres additifs tels que des pigments à effet métallisé et nacré, des additifs anti-UVs pour protéger la matrice polymérique, un dispersant tel que du silane pour faciliter la dispersion des additifs et une charge nanométrique de type silice pour adapter les paramètres de viscosité du mélange, etc. peuvent être ajoutés.

Le procédé consiste à mélanger le ou les polymères destinés à former la matrice polymérique avec préférentiellement un dispersant. Ce premier mélange est réalisé avec les pigments photoluminescents éventuellement préalablement encapsulés. Ensuite, la silice poreuse est ajoutée à ce deuxième mélange avec également l'ajout éventuel du système de colorants et des additifs. Les mélanges peuvent être réalisés soit partant de résines liquides avec un mélangeur type speed-mixer ou avec un mélangeur à pales. Le façonnage du mélange obtenu peut ensuite être réalisé par extrusion. Les mélanges peuvent également être réalisés dans une extrudeuse bi-vis ou dans un mélangeur haute vitesse pour la fabrication de mélange thermoplastique et la transformation en granulés, réutilisables pour le moulage par injection.

Des essais ont été réalisés en ajoutant entre 0,09% et 0,2% en poids, par rapport au poids total du matériau photoluminescent, de silice poreuse à une résine bi-composant époxy avec un durcisseur amide. Un taux de charge de 50% de pigments photoluminescents formés de l'aluminate de strontium dopés Europium, Dysprosium, par rapport au poids total du matériau photoluminescent a été ajouté.

Le façonnage de la matière a été réalisé par moulage par coulée de ce mélange. L'homme de métier pourra transposer facilement cette formule vers d'autres classes de matériaux polymères qui pourront être moulés par injection ou extrudés. Cette formule est également facilement transférable à des dispersions de polymères dans des solvants afin d'être appliquée par sérigraphie, tampographie, sprayage, etc.

Les propriétés de luminescence ont été mesurées selon la norme ISO 17514-2003 et une amélioration de 5% à 7% a été observée comparée à une même composition sans ajout de silice poreuse.

## Revendications

1. Matériau photoluminescent comportant en poids une matrice polymérique dans un pourcentage compris entre 19,99% et 54,99%, un composé photoluminescent dans un pourcentage compris entre 45% et 80%, de la silice poreuse dans un pourcentage compris entre 0,01% et 1% et optionnellement un système de colorants et des additifs avec un pourcentage total pour le système de colorants et les additifs compris entre 0% et 15% la silice poreuse est issue de squelettes de diatomées.

2. Matériau photoluminescent selon la revendication 1, **caractérisé en ce que** la matrice polymérique est présente dans un pourcentage compris entre 29,93% et 49,93%, le composé photoluminescent dans un pourcentage compris entre 50% et 70%, et la silice poreuse dans un pourcentage compris entre 0,07% et 0,3%.

3. Matériau photoluminescent selon la revendication 1 ou 2, **caractérisé en ce que** la matrice polymérique est présente dans un pourcentage compris entre 29,91% et 49,91%, le composé photoluminescent dans un pourcentage compris entre 50% et 70%, et la silice poreuse dans un pourcentage compris entre 0,09% et 0,2%.

4. Matériau photoluminescent selon l'une des revendications précédentes, **caractérisé en ce que** le composé photoluminescent comporte un pigment qui est un dérivé d'aluminate alcalino-terreux dopé aux terres rares.

5. Matériau photoluminescent selon la revendication précédente, **caractérisé en ce que** le pigment est un dérivé d'aluminate alcalino-terreux dopé Europium, Dysprosium de formule Sr(x)Al(y)O(z) : Eu²⁺,Dy³⁺.

6. Matériau photoluminescent selon la revendication précédente, **caractérisé en ce que** le pigment est du Sr₄Al₁₄O₂₅ : Eu²⁺,Dy³⁺ et/ou du SrAl₂O₄ : Eu²⁺,Dy³.

7. Matériau photoluminescent selon l'une des revendications 4 à 6, **caractérisé en ce que** le composé photoluminescent est constitué dudit pigment encapsulé dans une coque transparente organique ou minérale.

8. Matériau photoluminescent selon l'une des revendications précédentes, **caractérisé en ce que** la matrice polymérique comporte une ou plusieurs des résines de la famille des acryliques, de la famille des polyamides, de la famille des polyoléfines, de la famille des époxydes, de la famille des polyuréthanes, de la famille des élastomères fluorés et des silicones.

9. Matériau photoluminescent selon la revendication 7, **caractérisé en ce que** la coque transparente organique comporte une ou plusieurs des résines de la famille des acryliques, de la famille des polyamides, de la famille des polyoléfines, de la famille des époxydes, de la famille des polyuréthanes, de la famille des élastomères fluorés et des silicones et **en ce que** la coque transparente minérale comporte de la silice.

10. Matériau photoluminescent selon l'une des revendications 4 à 9, **caractérisé en ce que** le composé photoluminescent comporte des pigments de différentes granulométries.

11. Matériau photoluminescent selon la revendication précédente, **caractérisé en ce que** les pigments présentent au moins une première plage granulométrique centrée sur un diamètre D1 compris entre 500 nm et 10 µm et une deuxième plage granulométrique centrée sur un diamètre D2 compris entre 10 µm et 500 µm.

12. Article réalisé dans ou revêtu avec ledit matériau photoluminescent selon l'une des revendications précédentes.

13. Article selon la revendication précédente, **caractérisé en ce qu'**il s'agit d'un composant horloger.

## Patentansprüche

1. Photolumineszenzmaterial, das gewichtsprozentual eine Polymermatrix in einem Anteil zwischen 19,99 % und 54,99 %, eine photolumineszierende Verbindung in einem Anteil zwischen 45 % und 80 %, poröses Siliziumdioxid in einem Anteil zwischen 0,01 % und 1 % und optional ein Farbstoffsystem und Additive mit einem Gesamtanteil für das Farbstoffsystem und die Additive zwischen 0 % und 15 % umfasst, wobei das poröse Siliziumdioxid aus Skeletten von Diatomeen stammt.

2. Photolumineszenzmaterial nach Anspruch 1, **dadurch gekennzeichnet, dass** die Polymermatrix in einem Prozentanteil zwischen 29,93 % und 49,93 %, die photolumineszierende Verbindung in einem Prozentanteil zwischen 50 % und 70 % und das poröse Siliziumdioxid in einem Prozentanteil zwischen 0,07 % und 0,3 % vorhanden ist.

3. Photolumineszenzmaterial nach Anspruch 1 oder 2, **dadurch gekennzeichnet, dass** die Polymermatrix in einem Prozentanteil zwischen 29,91 % und 49,91 %, die photolumineszierende Verbindung in einem Prozentanteil zwischen 50 % und 70 % und das poröse Siliziumdioxid in einem Prozentanteil zwischen 0,09 % und 0,2 % vorhanden ist.

4. Photolumineszenzmaterial nach einem der vorhergehenden Ansprüche, **dadurch gekennzeichnet, dass** die photolumineszierende Verbindung ein Pigment umfasst, das ein mit Seltenerdmetallen dotiertes Erdalkalialuminat-Derivat ist.

5. Photolumineszenzmaterial nach dem vorstehenden Anspruch, **dadurch gekennzeichnet, dass** das Pigment ein Derivat eines Erdalkalialuminats ist, dotiert mit Europium, Dysprosium, der Formel Sr(x)Al(y)O(z): Eu²⁺,Dy³⁺.

6. Photolumineszenzmaterial nach dem vorstehenden Anspruch, **dadurch gekennzeichnet, dass** das Pigment Sr₄Al₁₄O₂₅ ist: Eu²⁺,Dy³⁺ und/oder SrAl₂O₄: Eu²⁺,Dy³.

7. Photolumineszenzmaterial nach einem der Ansprüche 4 bis 6, **dadurch gekennzeichnet, dass** die photolumineszierende Verbindung aus dem genannten Pigment besteht, das in einer transparenten organischen oder mineralischen Hülle verkapselt ist.

8. Photolumineszenzmaterial nach einem der vorhergehenden Ansprüche, **dadurch gekennzeichnet, dass** die Polymermatrix ein oder mehrere Harze aus der Familie der Acrylharze, der Familie der Polyamide, der Familie der Polyolefine, der Familie der Epoxide, der Familie der Polyurethane, der Familie der fluorierten Elastomere und der Silikone umfasst.

9. Photolumineszenzmaterial nach Anspruch 7, **dadurch gekennzeichnet, dass** die transparente organische Hülle ein oder mehrere Harze aus der Familie der Acrylharze, der Familie der Polyamide, der Familie der Polyolefine, der Familie der Epoxide, der Familie der Polyurethane, der Familie der fluorierten Elastomere und der Silikone umfasst und dass die transparente mineralische Hülle Siliziumdioxid umfasst.

10. Photolumineszenzmaterial nach einem der Ansprüche 4 bis 9, **dadurch gekennzeichnet, dass** die photolumineszierende Verbindung Pigmente unterschiedlicher Korngrößen umfasst.

11. Photolumineszenzmaterial nach dem vorstehenden Anspruch, **dadurch gekennzeichnet, dass** die Pigmente mindestens einen ersten Korngrößenbereich aufweisen, der um einen Durchmesser D1 zwischen 500 nm und 10 µm zentriert ist, und einen zweiten Korngrößenbereich, der um einen Durchmesser D2 zwischen 10 µm und 500 µm zentriert ist.

12. Artikel, der mit diesem Photolumineszenzmaterial nach einem der vorhergehenden Ansprüche hergestellt oder beschichtet ist.

13. Artikel nach dem vorstehenden Anspruch, **dadurch gekennzeichnet, dass** es sich um eine Uhrenkomponente handelt.

## Claims

1. A photoluminescent material including by weight a polymer matrix in a percentage comprised between 19.99% and 54.99%, a photoluminescent compound in a percentage comprised between 45% and 80%, porous silica in a percentage comprised between 0.01% and 1% and optionally a dye system and additives with a total percentage for the dye system and additives comprised between 0% and 15%, porous silica is derived from diatom skeletons.

2. The photoluminescent material according to claim 1, **characterised in that** the polymer matrix is present in a percentage comprised between 29.93% and 49.93%, the photoluminescent compound in a percentage comprised between 50% and 70%, and the porous silica in a percentage comprised between 0.07% and 0.3%.

3. The photoluminescent material according to claim 1 or 2, **characterised in that** the polymer matrix is present in a percentage comprised between 29.91% and 49.91%, the photoluminescent compound in a percentage comprised between 50% and 70%, and the porous silica in a percentage comprised between 0.09% and 0.2%.

4. The photoluminescent material according to one of the preceding claims, **characterised in that** the photoluminescent compound includes a pigment which is a rare earth-doped alkaline earth aluminate derivative.

5. The photoluminescent material according to the preceding claim, **characterised in that** the pigment is a Europium, Dysprosium doped alkaline earth aluminate derivative of formula Sr(x)Al(y)O(z): Eu²⁺, Dy³⁺.

6. The photoluminescent material according to the preceding claim, **characterised in that** the pigment is Sr₄Al₁₄O₂₅: Eu²⁺, Dy³⁺ and/or SrAl₂O₄: Eu²⁺, Dy³.

7. The photoluminescent material according to one of claims 5 to 6, **characterised in that** the photoluminescent compound consists of said pigment encapsulated in a transparent organic or mineral shell.

8. The photoluminescent material according to one of the preceding claims, **characterised in that** the polymer matrix includes one or more resins from the acrylic family, the polyamide family, the polyolefin family, the epoxy family, the polyurethane family, the fluoroelastomer family and silicones.

9. The photoluminescent material according to claim 7, **characterised in that** the transparent organic shell includes one or more resins from the acrylic family, the polyamide family, the polyolefin family, the epoxy family, the polyurethane family, the fluoroelastomer family and silicones, and **in that** the transparent inorganic shell includes silica.

10. The photoluminescent material according to one of claims 4 to 9, **characterised in that** the photoluminescent compound includes pigments of different particle sizes.

11. The photoluminescent material according to the preceding claim, **characterised in that** the pigments have at least a first particle size range centred on a diameter D1 comprised between 500 nm and 10 µm and a second particle size range centred on a diameter D2 comprised between 10 µm and 500 µm.

12. An article made of or coated with said photoluminescent material according to one of the preceding claims.

13. The article according to the preceding claim, **characterised in that** it is a timepiece component.
